# EUROPEAN PATENT SPECIFICATION

(11) **EP 1 287 949 B1**
(45) Date of publication and mention of the grant of the patent: **12.12.2007**
(21) Application number: 02019134.2
(22) Date of filing: 29.08.2002
(51) Int. Cl.: B24B 53/00, B24D 7/00, B23H 5/08

(54) **Metal-less bond grinding stone, and electrolytic dressing grinding method and apparatus using the grinding stone**
Nicht-metallisch gebundener Schleifstein, elektrolytische Abrichtmethode und Vorrichtung mit genanntem Schleifstein
Meule à une liaison non-métallique, méthode de décrassage électrolytique et appareil utilisant ladite meule

(30) Priority: 04.09.2001 JP 2001267863
(43) Date of publication of application: 05.03.2003
(73) Proprietor: RIKEN, Wako-shi, Saitama 351-0198 (JP)
(72) Inventor: Ohmori, Hitoshi, Wako-shi, Saitama 351-0198 (JP); Itoh, Nobuhide, Hitachi-shi, Ibaraki 316-0024 (JP); Katahira, Kazutoshi, Wako-shi, Saitama 351-0198 (JP); Ono, Teruko, Wako-shi, Saitama 351-0198 (JP); Hokkirigawa, Kazuo, Sendai-shi, Miyagi 980-0811 (JP)
(74) Representative: Grünecker, Kinkeldey, Stockmair & Schwanhäusser Anwaltssozietät

(56) References cited:
- EP-A- 0 980 735
- GB-A- 1 242 234
- US-A- 3 476 677
- US-A- 4 490 158

## Description

### Field of the Invention

The present invention relates to a metal-less bond grinding stone, according to the preamble portion of claim 1, an electrolytic dressing grinding method and an apparatus using the grinding stone. Such type of metal-less bond grinding stone is known from GB-A-1242234.

### Description of the Related Art

The most common processing means for locations requiring mirror finish is a polishing work using loose abrasive grains such as lapping or polishing. However, the polishing work has problems that (1) efficiency is low because manual operation is normally made and (2) abrasive grains may bite into a work piece in certain cases. Accordingly, much attention is paid to a processing means using fixed abrasive grains typified by a grinding technique.

On the other hand, in accordance with the background of processing and the like of semiconductor circuits which become miniature more and more, demands are placed on development and commercialization of a ultra-precision grinding technology in which a processing machine having a high positioning accuracy is combined a fixed abrasive grain processing technique. The ultra-precision grinding must satisfy stringent specifications in terms of ground surface roughness, shape accuracy, and surface quality level.

As the processing means for overcoming the above problems, an electrolytic in-process dressing grinding is noticed, in which the grinding is performed on a work piece with a conductive grinding stone using fixed abrasive grains while the surface of the conductive grinding stone is subjected to electrolytic dressing. This grinding means is hereinafter referred to as the ELID grinding.

In the above ELID grinding, a working current of the electrolytic dressing is relatively high (for example, at about 10 A) at the start of dressing. After a certain dressing time (for example, 20 to 30 minutes), a metal oxide (non-conductive film) is formed on the surface of the conductive grinding stone during the electrolytic dressing, and a thickness of the non-conductive film is kept almost constant depending on a balance between the grinding and the electrolytic dressing. Therefore, there is generally shown a feature that the working current of the electrolytic dressing is maintained at a relatively low value (for example, about 2 A). In this stable condition, the fine abrasive grains are properly projected and held, which makes it possible to usually achieve the satisfactory ELID grinding. Therefore, the non-conductive film on the surface of the grinding stone is indispensable in the ELID grinding. It has been considered that any stable ELID grinding is not possible unless this film is formed.

On the other hand, in the ELID grinding, a metal bond grinding stone in which the abrasive grains are fixed with metal powder is used as the conductive grinding stone, and cast iron, cobalt, bronze and the like can be used as the metal powder. However, in such a case, a problem inconveniently rises. That is to say, when the conductive grinding stone using such metal powder as a binder is used in the ELID grinding, heavy metal ions are dissolved in a grinding fluid during the electrolytic dressing, and hence, the environment is polluted with a waste liquid containing these heavy metal ions.

Particularly, when the conductive grinding stone containing copper, tin or the like is used for the processing of device wafers after the formation of devices in a semiconductor wafer manufacturing field, there has occurred a problem that a device performance deteriorates owing to the heavy metal ions. Accordingly, also in order to prevent the contamination of the device wafers with the metals, demand has been made on a conductive grinding stone which does not generate the heavy metal ions (hereinafter referred to as a metal-less bond grinding stone).

### SUMMARY OF THE INTENTION

The present invention has been developed to overcome these problems. Namely, an object of the present invention is to provide a metal-less bond grinding stone which can prevent environmental pollution with a waste liquid containing heavy metal ions and metal contamination of device wafers and which can achieve a mirror-like high-quality level ground surface with a satisfactory processing efficiency, and to provide an electrolytic dressing grinding method and an apparatus using the grinding stone.

According to the present invention, the metal-less bond grinding stone according to claim 1 is provided. The invention is based on a grinding stone for electrolytic dressing for protrusion of grains on the grinding stone by electrolytic dressing and which comprises abrasive grains and a bond portion for holding the abrasive grains, wherein the bond portion is of a nonmetallic material containing carbon and resin.

According to the constitution of the present invention, the bond for holding the abrasive grains of the grinding stone for the electrolytic dressing comprises carbon and resin. Owing to the presence of carbon, the bond portion becomes conductive, and carbon is liberated during the electrolytic dressing, whereby the abrasive grains are dressed.

Furthermore, since a metallic material is not contained at all in the bond portion, even when the metal-less bond grinding stone is subjected to the electrolytic dressing, a waste liquid containing heavy metal ions is not produced, thereby preventing environmental pollution. Moreover, carbon itself does not affect the device wafers, metal contamination of the device wafers can be substantially prevented.

According to a preferred embodiment of the present invention, the metal-less bond grinding stone comprises a mixture of abrasive grains, carbon powder and resin powder, and is formed by sintering the mixture under pressure at a softening temperature lower than a resin melting temperature.

According to this constitution, the metal-less bond grinding stone of a desired shape can be formed by softening, pressurization and sintering without melting of a resin. The resin has elasticity to elastically hold the abrasive grains. In consequence, many abrasive grains act substantially uniformly on a work piece, which makes it possible to obtain the mirror-like high-quality level ground surface with a satisfactory processing efficiency.

It is specified that a blend ratio of carbon to the resin in this metal-less bond grinding stone is about 20% or more and about 30% or less. Within this carbon ratio range, electrical resistivity, deflective strength and Young's modules are almost constant, thereby making it possible to obtain electrical resistance appropriate to the electrolytic dressing, and strength and elasticity enough to hold the abrasive grains.

Another metal-less bond grinding stone is also acceptable which may comprise a mixture of the abrasive grains and carbon-containing powder and which may be obtained by sintering the mixture to impart conductivity and mechanical strength to the carbon-containing powder. For example, unutilizable resources such as rice bran may be sintered to provide the conductivity and the mechanical strength, thereby constituting the metal-less grinding stone, which makes it possible to obtain the metal-less bond grinding stone in which the electrical resistance and the mechanical properties of the bond portion are adequately adjusted and the bond portion does not contain metallic materials at all.

Still another metal-less bond grinding stone is also acceptable which may comprise a mixture of the abrasive grains and resin powder and which may be obtained by sintering the mixture to carbonize at least a part of the resin powder. For example, the sintering step can be carried out at a high temperature in an inactive gas atmosphere to carbonize a part of the resin, which makes it possible to adjust the electrical resistance and the mechanical properties of the bond portion.

Furthermore, according to the present invention, there is provided an electrolytic dressing grinding method which comprises a step of applying a voltage between the metal-less bond grinding stone (1)of claim 1 having a bond portion that is of a nonmetallic material comprising carbon and resin, and an electrode (2) while a conductive grinding fluid (3) is allowed to flow between the metal-less bond grinding stone (1) and the electrode (2), and a step of grinding a work piece (4) while the grinding stone is subjected to electrolytic dressing, wherein a current which is allowed to flow between the grinding stone and the electrode is controlled within a desired range.

In the metal-less bond grinding stone having the bond portion not containing any metallic material, even when the electrolytic dressing is continued, any non-conductive film is not formed on the surface thereof, so that an adjustment function of the working current of the electrolytic dressing by means of a non-conductive film cannot be obtained. On the other hand, however, the current which flows between the grinding stone and the electrode is not affected by the non-conductive film, so that the current is always maintained at a substantially constant value from an early stage of the dressing. In consequence, it has experimentally been confirmed that the electrolytic dressing is positively controlled by controlling this current within a predetermined range, so that stable ELID grinding can be achieved.

Furthermore, according to the present invention, there is provided an electrolytic dressing grinding apparatus using a metal-less bond grinding stone, which comprises the metal-less bond grinding stone (1) of claim 1 having a bond portion that is of a nonmetallic material comprising carbon and resin, a carbon electrode (2) which is located at a distance from a grinding surface of the metal-less bond grinding stone (1) and at least whose side opposite to the grinding stone is made from a carbon material, a grinding fluid supply means (6) for causing a conductive grinding fluid (3) not containing any heavy metal ions to flow between the grinding stone and the electrode, and a power source unit (8) for electrolytic dressing which applies a voltage between the grinding stone and the electrode and which controls the current flowing between them within a predetermined range.

The metal-less grinding stone (1) is used as the grinding stone, the carbon electrode (2) is used as the electrode, and the conductive grinding fluid (3) which does not contain any heavy metal ions is used, which makes it possible to fundamentally prevent environmental pollution with heavy metal ions and contamination of device wafers with metals.

In the power source unit (8) for the electrolytic dressing, the voltage is applied between the grinding stone and the electrode to control the current between them within the predetermined range, whereby the electrolytic dressing is positively controlled, which makes it possible to obtain a mirror-like high-quality finish surface with a satisfactory processing efficiency.

The other objects and advantages of the present invention will be apparent in the following detailed description of illustrative embodiments.

### BRIEF DESCRIPTION OF THE DRAWINGS

Fig. 1 shows a schematic view of a manufacturing process of a metal-less bond grinding stone of the present invention.
Fig. 2 shows a relationship between a blend ratio of carbon and electrical resistivity.
Fig. 3 shows a relationship between the blend ratio and deflective strength and Young's modules.
Fig. 4 shows a constitutional view of an electrolytic dressing grinding apparatus of the present invention.
Fig. 5 shows a relationship between an electrolytic time and a working current value during initial electrolytic dressing.
Fig. 6 shows a roughness profile of a surface ground by the metal-less bond grinding stone.
Fig. 7 shows a behavior of the working current values of a conventional grinding stone and the grinding stone of the present invention during the initial electrolytic dressing.
Fig. 8 shows a relationship of processing pressure and processing efficiency between the conventional grinding stone and the grinding stone of the present invention.
Fig. 9 shows a relationship of the processing pressure and surface roughness between the conventional grinding stone and the grinding stone of the present invention.
Fig. 10 shows a comparison of a processing efficiency between presence and absence of ELID of the metal-less bond grinding stone.

### Description of the Preferred Embodiments

Recently, solutions of environmental problems are becoming important more and more in various fields, and a grinding method which takes the environment into account is also demanded in a field of machining work. In the future, it is considered that the importance of such a technique will be increasing more and more.

The inventors of the present invention have developed a metal-less conductive bond grinding stone (hereinafter referred to as "metal-less bond grinding stone") for ELID grinding using carbon as a conductive material for the main purposes of reducing the invasion of heavy metal ions into a grinding fluid to facilitate a grinding fluid treatment, and reducing the contamination of a work piece with the metals to facilitate a cleaning treatment, and for conductivity, strength, initial electrolytic dressing characteristics and grinding characteristics of the above grinding stone, various experiments have been conducted.

Preferred embodiments of the present invention will be described below together with test results. It is to be noted that common portions in drawings are indicated by the same symbols.

### 1. Manufacture of a metal-less bond grinding stone (Grinding stone manufacturing conditions and an experiment method)

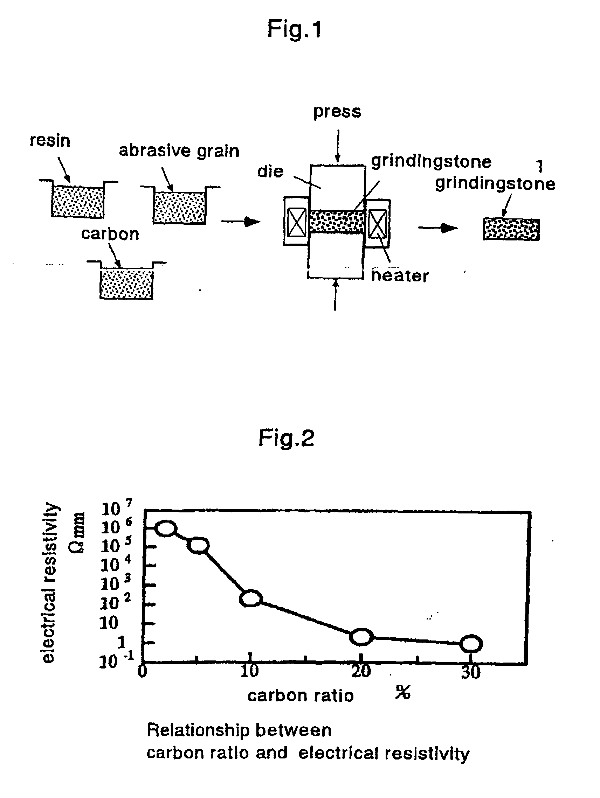

Fig. 1 shows a schematic view of a manufacturing process of a metal-less bond grinding stone according to the present invention. As shown in Fig. 1, the grinding stone is manufactured by mixing abrasive grains, carbon (about 30 µm) and a phenolic resin, and then sintering the mixture under pressure by a hot press. The metal-less bond grinding stone according to the present invention was manufactured at a sintering temperature of 200°C under a molding pressure of 19.6 kPa (maintained for 40 to 60 minutes). The grinding stones (10 x 4 x 40, concentration degree = 100) were manufactured at carbon blend ratios of 2%, 5%, 10%, 20% and 30% to the resin, and electrical resistivity, Young's modules, and deflection strength of the manufactured wheels were measured.

### (Blend ratio and characteristics)

Fig. 2 shows a relationship between a blend ratio of carbon and electrical resistivity. With the increase of the carbon blend ratio, the electrical resistivity tended to decrease. A substantially constant electrical resistivity of 1 Ωmm was achieved at a carbon blend ratio of about 20% or more and about 30% or less.

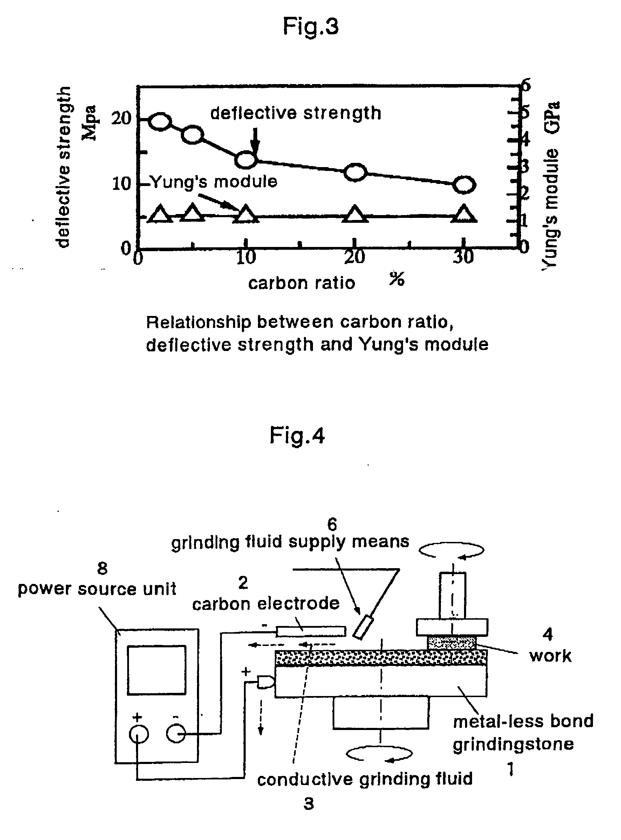

Fig. 3 shows a relationship between a blend ratio, deflection strength and Young's modules. With the increase of the blend ratio, the strength tended to decrease. In the case of this grinding stone, the Young's modules was about 5 GPa regardless of the blend ratio. In addition, a substantially constant deflection strength of 10 MPa was obtained at a carbon blend ratio of about 20% or more and about 30% or less.

### (Experimental manufacturing conditions of a grinding stone)

In view of the above results, experimental manufacturing conditions of a grinding stone were such that a blend ratio of carbon to a resin was 20%, a concentration degree was 100, a molding pressure was 19.6 kPa, and a sintering temperature was 200°C. For abrasive grains, diamond of #8000 (average grain diameter = about 2 µm) was used and shaped into a disk form having an outside diameter of 250 mm and a grinding stone width of 55 mm. Evaluation of the experimentally manufactured grinding stone was made by ELID lap grinding.

It is to be noted that the metal-less bond grinding stone according to the present invention is not limited to the above example, and alternatively, the metal-less bond grinding stone may be manufactured by sintering a mixture of the abrasive grains and the carbon-containing powder to impart conductivity and mechanical strength to the carbon containing powder. For example, unutilizable resources such as rice bran may be sintered to thereby add the conductivity and the mechanical strength thereto to constitute the metal-less grinding stone, whereby the metal-less bond grinding stone can be obtained in which electric resistance and mechanical properties of a bond portion are optimally adjusted and any metallic materials are not contained in the bond portion.

Furthermore, the metal-less bond grinding stone there may be manufactured by sintering a mixture of the abrasive grains and the resin powder to carbonize at least a part of the resin powder. For example, the sintering step can be carried out at a high temperature in an inactive gas atmosphere to carbonize a part of the resin, thereby enabling the adjustment of the electrical resistance and the mechanical properties of the bond portion.

### 2. Test of basic grinding characteristics

### (Experimental unit)

Fig. 4 shows a constitutional view of an electrolytic dressing grinding unit according to the present invention. In this experiment, an electrolytic dressing grinding unit of the present invention was constituted using an ELID lap grinding system, and a basic test regarding basic grinding characteristics of a metal-less bond grinding stone was made.

The system used in this experiment is shown below.
(a) Grinding machine: An improved version of a single-side lapping machine (MG773B) was used.
(b) Grinding stone: A #8000 metal-less bond diamond grinding stone (metal-less bond grinding stone) was used. The wheel was a disk having an outside diameter of 250 mm, a grinding stone width of 55 mm, and a concentration degree of 100 (volume ratio = about 1/4).
(c) Grinding fluid: A chemical solution type grinding fluid (CEM) diluted with tap water 50 times was used.
(d) Electrolyte power source unit: A high-frequency electrolyte power source unit (ED630) only for ELID was used.
(e) Work piece: A monocrystaline silicon (φ30) was used.

### (Procedure of grinding experiment)

The experimentally manufactured grinding stone was applied to ELID lap grinding to grind the monocrystaline silicon (φ30), and roughness on a ground surface was inspected. Grinding conditions were that a grinding stone/work piece rotating speed was about 100 rpm and a grinding pressure was 100 kPa. Moreover, electrolytic conditions were that an open voltage was 60 V, a maximum current was 30 A, and a pulse supply/pause interval was 2 µs.

### (Experimental results)

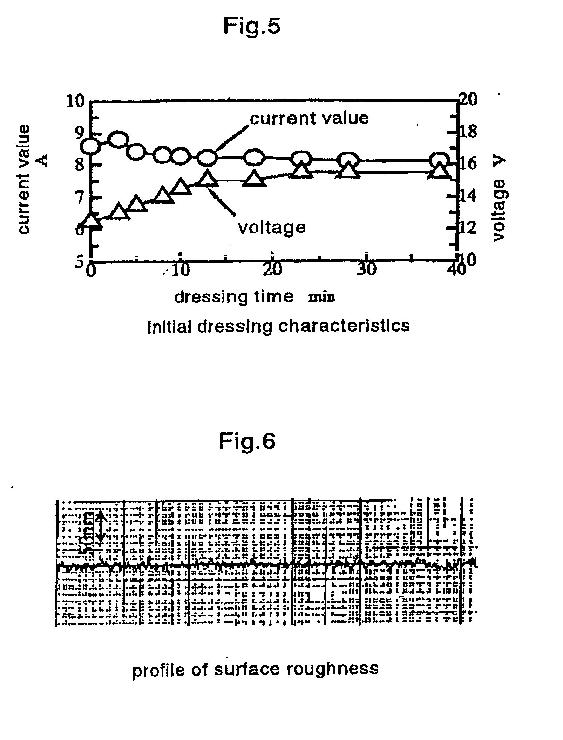

Fig. 5 shows a relationship between an electrolytic time and a working current value during initial electrolytic dressing. Since a bond material for the metal-less bond grinding stone of the present invention did not contain any material which brought about an anodic oxidation reaction, no sudden current value decrease was observed. Namely, a current which flowed between the grinding stone and an electrode was not affected by a non-conductive film, and kept an almost constant value from an initial stage of the dressing. Therefore, it was experimentally confirmed that the electrolytic dressing could be positively controlled by controlling this current within a predetermined range to enable the stable ELID grinding.

Fig. 6 shows a roughness profile on a ground surface in the case that a monocrystaline silicon was ground using the metal-less bond grinding stone. A mirror surface having a ground surface roughness of 28 nmRy could be obtained. A ground surface roughness of 28 nmRy is equivalent to a mirror surface of 10 nm or less under an average surface roughness Ra.

Accordingly, it was confirmed from this test that the use of the metal-less bond grinding stone not only enabled the stable ELID grinding but also ensured mirror-like high-quality level ground surface.

### 3. Comparative test with metal bond grinding stone

A comparison test was made on differences in grinding characteristics between a metal bond grinding conventionally used as a grinding stone for ELID grinding and a metal-less bond grinding stone of the present invention.

### (Experimental unit)

In this experiment, the same electrolytic dressing grinding unit as in "2. Basic grinding characteristics test" was used, and similarly the same grinding fluid, power source and work piece were used. A #8000 metal-less bond diamond grinding stone (disk having an outside diameter of 250 mm and a grinding stone width of 55 mm, and a concëntration degree = 100) was used together with a #8000 metal-resin bond diamond grinding stone (metal:resin = 7:3, and concentration degree = 100) for comparison.

Moreover, a contact type surface roughness tester (Surf Test 701) was used as an evaluation unit to measure a ground surface roughness. An EPMA (Electron Probe Micro Analyzer) was used to evaluate a surface condition.

### (Procedure of the experiment)

Grinding stones to be used were trued and their initial electrolytic dressing characteristics were inspected, followed by a grinding experiment of a monocrystaline silicon. The grinding experiment was made at a grinding stone/work piece rotating speed of 100 rpm by varying a grinding pressure, and differences in a ground surface roughness and a grinding efficiency were also inspected. In addition, a state on a ground surface of the work piece was also measured and observed by the use of EPMA. ELID electrolytic conditions included an open voltage of 60 V, a maximum current of 30 A, and a pulse supply/pause interval of 2 µs.

### (Initial electrolytic dressing characteristics)

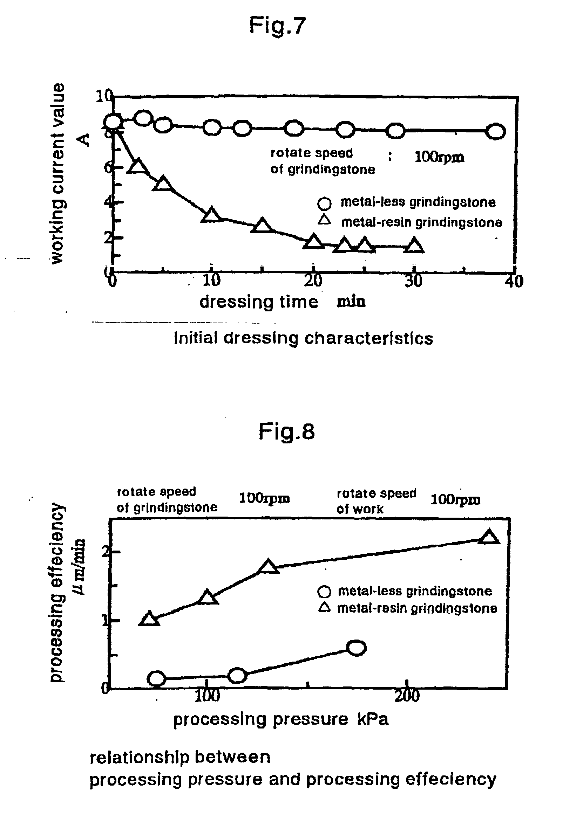

Fig. 7 shows a behavior of a working current value during initial electrolytic dressing of both grinding stones. In the case of a metal-resin bond grinding stone, a working current value non-linearly decreased with time and converged to a given value in about 20 minutes. On the other hand, in the case of the metal-less bond grinding stone, a slight decrease of the current value was observed, but a substantially constant value was shown.

### (Grinding characteristics)

Fig. 8 shows a relationship between a grinding pressure and an efficiency. It was observed under the above conditions that the work efficiency of the metal-less bond grinding stone was lower than that of the metal-resin bond grinding stone. This is considered to be due to a difference in a capacity to hold the abrasive grains. The work efficiency tended to be higher with the increase in the grinding pressure, which is considered to indicate the possibility of achieving the stable grinding under the above conditions.

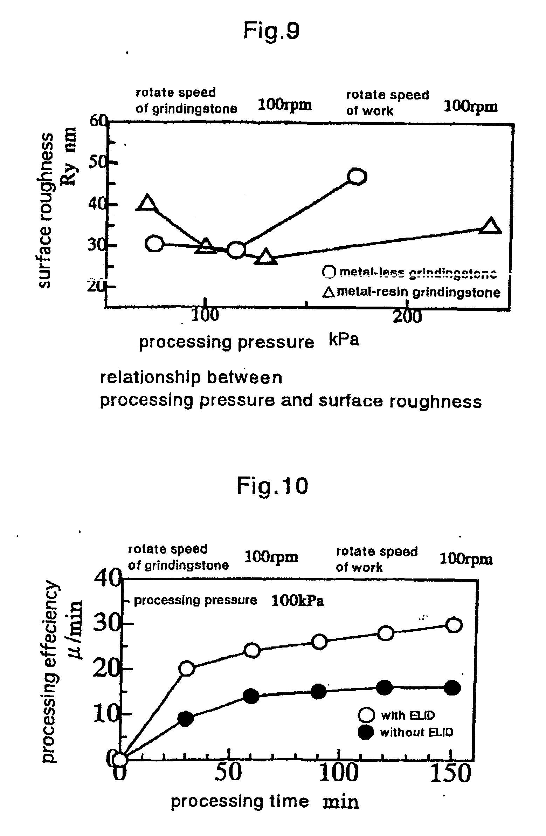

Fig. 9 shows a relationship between the grinding pressure and the ground surface roughness. The ground surface roughness tended to be worse slightly with the increase of the grinding pressure, but when the pressure ranged from 75 kPa to 115 kPa, there was obtained the satisfactory ground surface having a roughness of about 30 nmRy equivalent to that of a conventional metal-resin bond grinding stone.

### (Characteristics of a ground surface by the metal-less bond grinding stone)

Using a metal-less bond wheel and a metal-resin bond grinding stone, a monocrystaline silicon was ground, followed by the evaluation of characteristics of a ground surface by EPMA. In the case of the metal-less bond grinding stone, diffraction of the material of silicon was observed, but no metallic deposit was found. In the case of the metal-resin bond grinding stone, on the other hand, no metal component was identified in a satisfactory ground surface as in the case of the metal-less bond grinding stone. However, if any scratch mark existed, metallic components of a bond material were found to deposit around the mark. When compared with the metal-resin bond grinding stone, the metal-less bond grinding stone can readily produce the satisfactory ground surface without metal contamination.

As described above, the metal-less bond grinding stone was developed using carbon powder as one means to establish an ELID grinding technology friendly to environment, and inspection was made on its characteristics. As a result of the inspection and review, the following results could be obtained:
1) By setting a carbon powder blend ratio to about 20%, satisfactory conductivity and strength can be secured.
2) In the metal-less bond grinding stone, a work efficiency is lower than in the metal-resin bond grinding stone, but the equivalent ground surface roughness can be obtained.
3) As a result of the evaluation on the ground surface by EMPA, the satisfactory ground surface without metal contamination can be produced.

### (Effects on the work efficiency by presence or absence of ELID)

Fig. 10 shows a comparative view of a work efficiency of the metal-less bond grinding stone by presence or absence of ELID. The work piece was silicon and the grinding stone was a #8000 metal-less bond grinding stone. As shown in this drawing, the addition of ELID enables the improvement and maintenance of the work efficiency.

In the metal-less bond grinding stone according to the present invention, the bond portion for holding the abrasive grains of the grinding stone for the electrolytic dressing comprises a carbon-containing nonmetallic material alone. Owing to the presence of carbon, the bond portion becomes conductive, and carbon is molten during the electrolytic dressing, whereby the abrasive grains can be protruded.

Furthermore, the bond portion does not contain metallic materials at all, and therefore, even if this metal-less bond grinding stone is subjected to the electrolytic dressing, a waste liquid containing heavy metal ions is not produced, which makes it possible to prevent environmental pollution. In addition, since carbon itself does not adversely affect device wafers, so that metal contamination of the device wafers can be substantially prevented.

Moreover, the current which flows between the grinding stone and the electrode is not affected by a non-conductive film and always remains an almost constant value from an initial stage of the dressing. Therefore, it was confirmed from the experiment that, by controlling this current within a predetermined range, the electrolytic dressing can positively be controlled to ensure the stable ELID grinding.

Therefore, the metal-less bond grinding stone as well as the electrolytic dressing grinding method and apparatus using the grinding stone according to the present invention have excellent effects, and for example, environmental pollution by a waste liquid containing heavy metal ions and metal contamination of device wafers can be prevented, and the mirror-like high-quality level ground surface can be obtained with a satisfactory efficiency.

Although some preferable embodiments of the present invention have been described, it is to be understood that the rights and scope of this invention are not limited to those embodiments, but to the invention as defined by the appended claims.

## Claims

1. A metal-less bond grinding stone for dressing a ground surface by electrolytic dressing, comprising:
abrasive grains and a bond portion for holding the abrasive grains, wherein the bond portion is of a nonmetallic material containing carbon and resin,
**characterised by** a blend ratio of carbon to the resin is about 20% or more and about 30% or less.

2. The metal-less bond grinding stone according to claim 1, which comprises a mixture of abrasive grains, carbon powder and resin powder and which can be formed by sintering the mixture under pressure at a softening temperature lower than a resin melting temperature.

3. The metal-less bond grinding stone according to claim 1, which comprises a mixture of the abrasive grains and carbon-containing powder and which can be obtained by sintering the mixture to impart conductivity and mechanical strength to the carbon-containing powder.

4. The metal-less bond grinding stone according to claim 1, which comprises a mixture of the abrasive grains and resin powder and which can be obtained by sintering the mixture to carbonize at least a part of the resin powder.

5. An electrolytic in-process dressing grinding method comprising a step of applying a voltage between the metal-less bond grinding stone (1) of claim 1, and an electrode (2) while a conductive grinding fluid (3) is allowed to flow between the metal-less bond grinding stone (1) and the electrode (2), and a step of grinding a work piece (4) while the grinding stone is subjected to electrolytic dressing, wherein a current which is allowed to flow between the grinding stone and the electrode is controlled within a desired range.

6. An electrolytic dressing grinding apparatus using a metal-less bond grinding stone, which comprises the metal-less bond grinding stone (1) of claim 1, a carbon electrode (2) which is located at a distance from a grinding surface of the metal-less bond grinding stone (1) and at least whose side opposite to the grinding stone is made from a carbon material, a grinding fluid supply means (6) for causing a conductive grinding fluid (3) not containing any heavy metal ions to flow between the grinding stone and the electrode, and an power source unit (8) for electrolytic dressing which applies a voltage between the grinding stone and the electrode and which controls the current flowing between them within a predetermined range.

## Patentansprüche

1. Ein metallfreier Verbund - Schleifstein zum Abrichten einer geschliffenen Oberfläche durch ein elektrolytisches Abrichten, umfassend:
abtragende Körner und einen Verbund - Abschnitt zum Halten der abtragenden Körner, wobei der Verbund - Abschnitt aus einem nicht - metallischen Material, enthaltend Kohlenstoff und Kunststoff, gefertigt ist, **gekennzeichnet durch** ein Mischverhältnis von Kohlenstoff zu Kunststoff von ungefähr 20 % oder mehr und ungefähr 30 % oder weniger.

2. Der metallfreie Verbund - Schleifstein im Einklang mit Anspruch 1, welcher eine Mischung von abtragenden Körnern, Kohlenstoffpulver und Kunststoffpulver umfasst, und welcher durch Sintern der Mischung unter Druck bei einer Erweichungstemperatur, die geringer ist als eine Temperatur zum Schmelzen des Kunststoffs, hergestellt werden kann.

3. Der metallfreie Verbund - Schleifstein im Einklang mit Anspruch 1, welcher eine Mischung der abtragenden Kömem und eines Kohlenstoff enthaltenden Pulvers umfasst, und welcher erhalten werden kann durch Sintern der Mischung, um dem Kohlenstoff enthaltenen Pulver eine Leitfähigkeit und eine mechanische Stärke zu verleihen.

4. Der metallfreie Verbund - Schleifstein im Einklang mit Anspruch 1, welcher eine Mischung der abtragenden Körner und eines Kunststoffpulvers umfasst, und welcher erhalten werden kann durch Sintern der Mischung, um zumindest einen Teil des Kunststoffpulvers zu karburieren.

5. Ein Verfahren zum elektrolytischen und innerprozesslichen Abrichten und Schleifen, umfassend einen Schritt des Anlegens einer Spannung zwischen dem metallfreien Verbund - Schleifstein (1) nach Anspruch 1 und einer Elektrode (2), während eine leitende Schleifflüssigkeit (3) zwischen dem metallfreien Verbund - Schleifstein (1) und der Elektrode (2) fließen gelassen wird, und einen Schritt des Schleifens eines Werkstücks (4), während der Schleifstein dem elektrolytischen Abrichten unterzogen wird, wobei ein Strom, der zwischen dem Schleifstein und der Elektrode fließen gelassen wird, innerhalb eines erwünschten Bereichs gesteuert wird.

6. Eine Vorrichtung zum elektrolytischen Abrichten und-Schleifen unter Verwendung eines metallfreien Verbund - Schleifsteins, welche umfasst: den metallfreien Verbund-Schleifstein (1) nach Anspruch 1, eine Kohlenstoffelektrode (2), weiche in einem Abstand von einer Schleifoberfläche des metallfreien Verbund - Schleifsteins (1) angeordnet ist, wobei zumindest die dem Schleifstein gegenüberliegende Seite davon aus einem Kohlenstoffmnaterial hergestellt ist, ein Mittel (6) zum Bereitstellen einer Schleifflüssigkeit, um zu bewirken, dass eine leitende Schleifflüssigkeit (3), die keine schwere metallischen Ionen enthält, zwischen dem Schleifstein und der Elektrode fließen kann, und eine Stromquelleneinheit (8) für das elektrolytische Abrichten, welche eine Spannung zwischen dem Schleifstein und der Elektrode anlegt, und welche die zwischen diesen beiden fließende Stromstärke innerhalb eines vorgegebenen Bereichs steuert.

## Revendications

1. Meule contenant un liant exempt de métal pour le dressage d'une surface meulée par dressage électrolytique, comprenant :
des grains d'abrasifs et une portion de liant pour maintenir les grains d'abrasifs, la portion de liant étant constituée d'une matière non métallique contenant du carbone et de la résine, **caractérisé par** une proportion du carbone à la résine entre environ 20 % ou plus et environ 30 % au moins.

2. Meule contenant un liant exempt de métal selon la revendication 1, qui comprend un mélange de grains d'abrasifs, de poudre de carbone et de poudre de résine et que l'on peut obtenir par frittage du mélange sous pression à une température de ramollissement qui est inférieure à la température de mise en fusion de la résine.

3. Meule contenant un liant exempt de métal selon la revendication 1, qui comprend un mélange de grains d'abrasifs et d'une poudre de résine, que l'on peut obtenir par frittage du mélange afin de conférer une conductibilité et une résistance mécanique à la poudre contenant du carbone.

4. Meule contenant un liant exempt de métal selon la revendication 1, qui comprend un mélange de grains d'abrasifs et d'une poudre de résine, que l'on peut obtenir par frittage du mélange afin de carboniser au moins une partie de la poudre de résine.

5. Procédé de meulage/dressage électrolytique en cours de production, qui comprend l'étape consistant à appliquer une tension entre la meule contenant un liant exempt de métal (1) selon la revendication 1, et une électrode (2), tandis que l'on laisse s'écouler un fluide de meulage conducteur (3) entre la meule contenant un liant exempt de métal (1) et l'électrode (2), et étape consistant à meuler une pièce à usiner (4) tandis que la meule est soumise à un dressage électrolytique, un courant à même de circuler entre la meule et l'électrode étant réglé dans une plage désirée.

6. Appareil de meulage/dressage électrolytique en utilisant une meule contenant un liant exempt de métal, qui comprend la meule contenant un liant exempt de métal (1) selon la revendication 1, une électrode (2) qui est disposée à une certaine distance de la surface de meulage de la meule contenant un liant exempt de métal (1), et au moins, dont les côtés latéraux opposés à la meule sont constitués d'une matière à base de carbone, un moyen d'alimentation de fluide de meulage (6) pour obtenir un écoulement d'un fluide de meulage conducteur (3) ne contenant aucun ion de métaux lourds, entre la meule et l'électrode, et une unité d'alimentation (8) pour le dressage électrolytique qui permet d'appliquer une tension entre la meule et l'électrode et qui règle la circulation du courant entre elles dans une plage prédéterminée.
